# EUROPEAN PATENT SPECIFICATION

(11) **EP 3 609 052 B1**
(45) Date of publication and mention of the grant of the patent: **10.03.2021**
(21) Application number: 17904774.1
(22) Date of filing: 05.04.2017
(51) Int. Cl.: H02K 5/04, B60K 1/00

(54) **MOTOR COLLISION COUNTERMEASURE STRUCTURE**
MOTORKOLLISIONGEGENMASSNAHMESTRUKTUR
STRUCTURE DE CONTREMESURES ANTICOLLISION POUR MOTEUR

(43) Date of publication of application: 12.02.2020
(73) Proprietor: Nissan Motor Co., Ltd., Yokohama-shi, Kanagawa 221-0023 (JP); Renault S.A.S., 92100 Boulogne-Billancourt (FR)
(72) Inventor: KUME, Yuuichi, Atsugi-shi Kanagawa 243-0123 (JP); MIZOKAMI, Ryoichi, Atsugi-shi Kanagawa 243-0123 (JP)
(74) Representative: Grünecker Patent- und Rechtsanwälte PartG mbB
(86) International application number: PCT/JP2017/014218
(87) International publication number: WO 2018/185874

(56) References cited:
- WO-A1-2015/052962
- WO-A1-2015/052962
- WO-A2-2015/125001
- DE-A1-102009 041 393
- JP-A- 2009 038 920
- JP-A- 2009 038 920

## Description

### TECHNICAL FIELD

The present invention relates to a collision countermeasure structure for a motor.

### BACKGROUND ART

In a hybrid vehicle having a motor and an engine as the drive sources thereof, the motor is provided with an angle sensor that detects the rotation angle of the motor (hereinafter referred to as "the resolver"). An example related to the technology mentioned above is described in Patent Document 1 shown below.

### Citation List

### Patent Document

Patent Document 1: WO2015/052962

### SUMMARY OF INVENTION

### Problem to be Solved by the Invention

However, according to the foregoing conventional technology, there is a possibility of a vehicle structure (e.g., a suspension member), which is positioned around a motor, interfering with a section which houses a resolver in case of a vehicle front collision, thus requiring protection by a high-strength metal plate protector. This, therefore, has been likely to lead to drastically higher cost.

### Means for Solving the Problem

According to a collision countermeasure structure for a motor of the present invention, the motor includes a housing provided with a step section incorporating a resolver on a shaft end surface. The housing is provided with a rib that extends between the step section, which opposes a vehicle structure disposed in a horizontal direction of a vehicle, and an end portion of the housing. The rib is formed to be lower on a housing end side and to be higher on the step section side.

### Effect of the Invention

Hence, according to the collision countermeasure structure for the motor in accordance with the present invention, the vehicle structure slides along a contact surface of the rib, so that an impact to the step section incorporating the resolver can be reduced, thus suppressing damage to a conductive part such as a resolver.

### BRIEF DESCRIPTION OF DRAWINGS

FIG. 1 is a plan view illustrating the schematic configuration of a vehicle provided with a first embodiment observed from a vehicle lower direction;
FIG. 2 is a sectional view of a motor of the first embodiment observed from the vehicle lower direction;
FIG. 3 is a front view of the motor of the first embodiment observed from a vehicle left direction;
FIG. 4 presents diagrams illustrating the sequence of the operation of the first embodiment;
FIG. 5 is a front view of a motor of a second embodiment observed from the vehicle left direction;
FIG. 6 is a side view of the motor of the second embodiment observed from the vehicle lower direction;
FIG. 7 is a side view of a third embodiment observed from the vehicle lower direction;
FIG. 8 is a side view of a fourth embodiment observed from the vehicle lower direction;
FIG. 9 is a side view of a fifth embodiment observed from the vehicle lower direction;
FIG. 10 is a side view of a sixth embodiment observed from the vehicle lower direction;
FIG. 11 is a side view of a seventh embodiment observed from the vehicle lower direction; and
FIG. 12 is a side view of an eighth embodiment observed from the vehicle lower direction.

### DESCRIPTION OF EMBODIMENTS

### [First Embodiment]

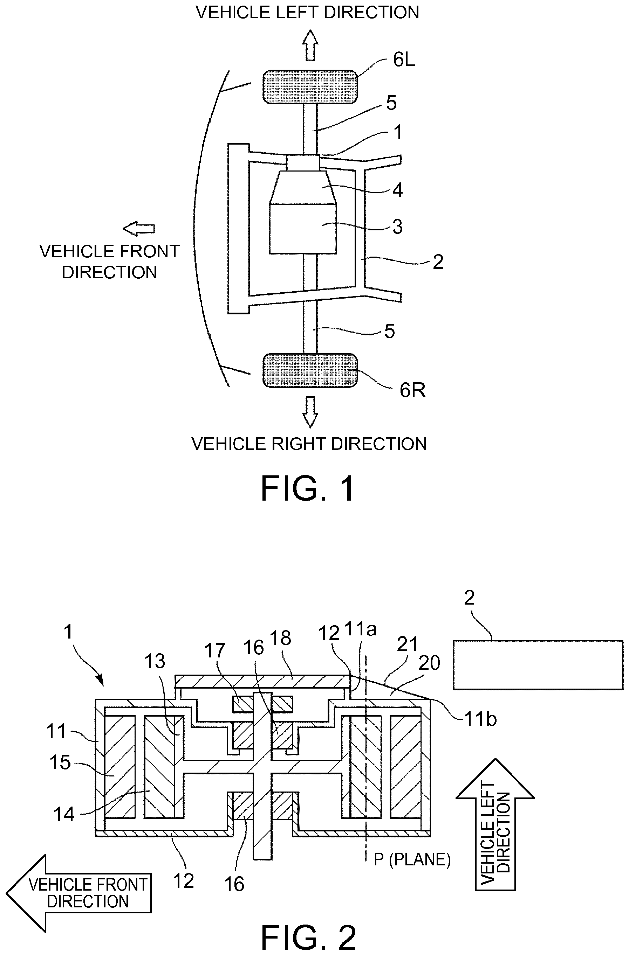

FIG. 1 is a plan view illustrating the schematic configuration of a vehicle provided with a first embodiment observed from a vehicle lower direction.

In the lateral direction of the vehicle, an engine 3, an automatic transmission 4, and a motor 1 are integrally connected from a vehicle right direction (the lower direction in the drawing).

Further, the driving force from the engine 3 or the motor 1 is transmitted to a pair of drive wheels 6L, 6R by drive shafts 5 through the automatic transmission 4.

A suspension member 2, which is a vehicle structure, is disposed in the vicinity of the same plane in a vehicle height direction where the motor 1 is positioned.

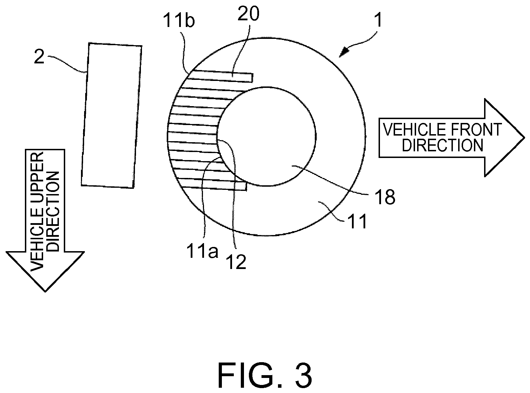

FIG. 2 is a sectional view of the motor of the first embodiment observed from a vehicle lower direction, and FIG. 3 is a front view of the motor of the first embodiment observed from a vehicle left direction.

As illustrated in FIG. 2, a drive axle 13 that drives the pair of drive wheels 6L, 6R through the drive shafts 5, a rotor 14 fixed to the outer periphery of the drive axle 13, and a stator 15 fixed to a motor housing 11, being spaced away from the outer periphery of the rotor 14 by a predetermined distance, are incorporated (housed) in the motor housing 11. The drive axle 13 is rotatably supported by the motor housing 11 through a pair of bearings 16.

Further, a resolver 17, which functions as a motor rotation angle sensor, is provided at an end portion of the drive axle 13 in the vehicle left direction (the upper direction in the drawing).

The opening of the motor housing 11 in the lower direction in the drawing (the vehicle right direction) is sealed by a cover 12, and the opening of the motor housing 11 in the vehicle left direction (the upper direction in the drawing) is sealed by a resolver cover 18.

Further, a linear rib 20 is formed integrally with the motor housing 11 between an end portion 12 of a step section 11a incorporating the resolver 17 and an end portion 11b of the motor housing 11. The linear rib 20 is inclined with respect to a plane P, which is parallel to the step section 11a, such that the length (projection height) thereof decreases toward the end portion 11b on the suspension member 2 side from the end portion 12 of the step section 11a.

The left direction in the drawing is the vehicle front direction.

As illustrated in FIG. 3, the rib 20 is composed of seven ribs placed in parallel.

The arrow direction in the drawing is the vehicle front direction.

A description will now be given of the operation.

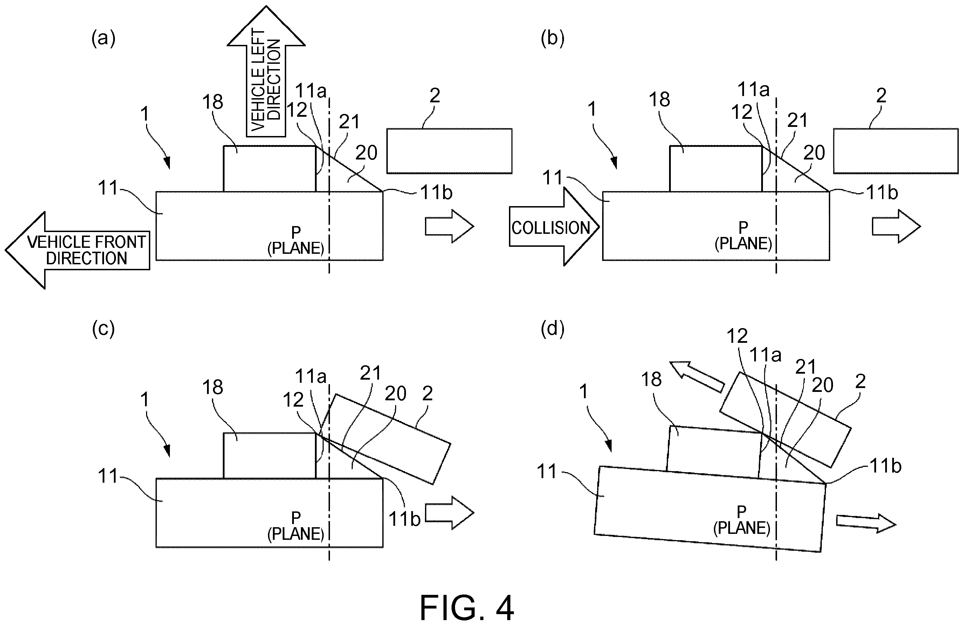

FIG. 4 presents the diagram illustrating the sequence of the operation of the first embodiment.

FIG. 4(a) illustrates a normal state.

FIG. 4(b) illustrates a collision of a vehicle with an obstacle in front of the vehicle. The collision causes the entire motor 1 to move toward the rear of the vehicle, and a contact surface 21 of the linear rib 20, which is inclined with respect to the plane P, comes in contact with the suspension member 2 as a vehicle structure.

Then, as illustrated in FIG. 4(c) and FIG. 4(d), when the entire motor 1 further moves toward the rear of the vehicle, the suspension member 2 slides along the contact surface 21 of the seven ribs 20 by being guided by the contact surface 21 of the linear rib 20 formed of one straight line inclined with respect to the plane P. This causes the entire motor 1 to move to get into under the suspension member 2.

Thus, as compared with the case where the step section 11a in a vehicle lateral direction (a vertical direction in the drawings) comes in direct contact with the suspension member 2 without the rib 20, the impact to the step section 11a incorporating the resolver 17 can be reduced, making it possible to suppress the damage to a conductive part, such as the resolver 17.

A description will now be given of the advantageous effects. The collision countermeasure structure for the motor of the first embodiment provides the following advantageous effects.(1) The step section 11a incorporating the resolver 17 is provided with the rib 20, which extends between the end portion 12 of the step section 11a opposing the suspension member 2, which is a vehicle structure disposed in the vicinity of the same plane in the vehicle height direction, and the end portion 11b of the housing 11. The rib 20 is inclined with respect to the plane P that is parallel to the step section 11a and has the contact surface 21 which is formed to be shorter (lower) on the end portion 11b side of the housing 11 that is adjacent to the suspension member 2 and to be longer (higher) on the step section 11a side. The contact surface 21 is a surface for coming in contact with the suspension member 2 as a vehicle structure.

Hence, when the entire motor 1 moves toward the rear of the vehicle, the suspension member 2 slides along the contact surface 21 of the rib 20 by being guided by the contact surface 21 of the linear rib 20 inclined with respect to the plane P, which is parallel to the step section 11a, thus causing the entire motor 1 to move to get into under the suspension member 2 as a vehicle structure. This makes it possible to reduce the impact to the step section 11a incorporating the resolver 17 and therefore to suppress the damage to a conductive part, such as the resolver 17.
(2) The rib 20 is formed of seven ribs that are parallel.

Hence, the load applied to each rib can be reduced, thus making it possible to suppress damage to the rib 20.

### [Second Embodiment]

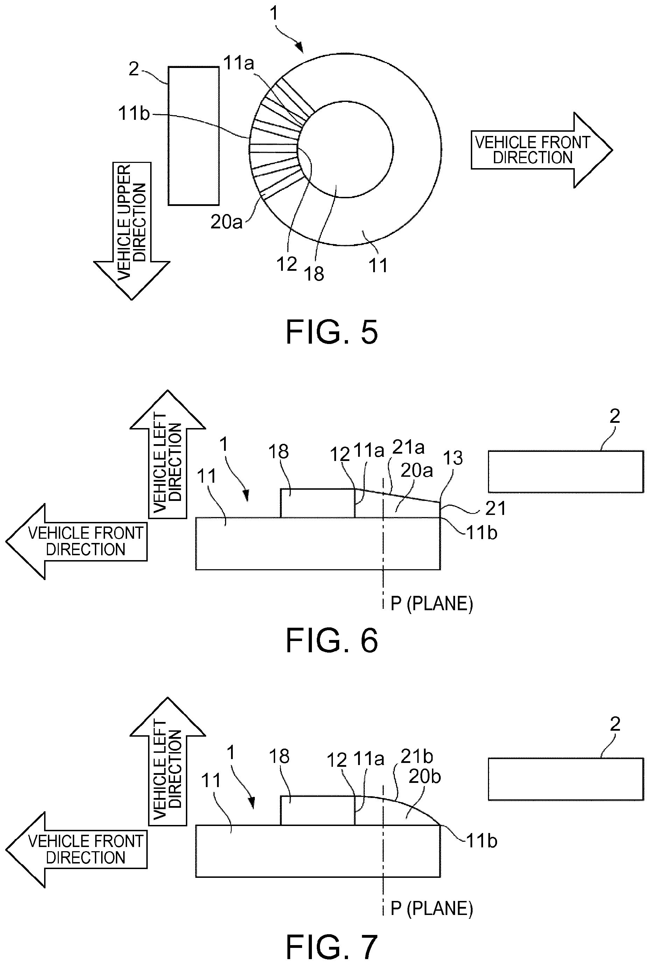

FIG. 5 is a front view of a motor of a second embodiment observed from the vehicle left direction, and FIG. 6 is a side view of the motor of the second embodiment observed from the vehicle lower direction.

The configuration of the second embodiment is the same as that of the first embodiment illustrated in FIG. 2 and FIG. 3 except for the shape of a rib 20a on an end portion 11b side of a motor housing 11 and the placement thereof in a front view. Therefore, like components as those in the first embodiment will be assigned like reference numerals and the descriptions thereof will be omitted, and a description will be given only of the rib 20a.

The rib 20a having a contact surface 21a for coming in contact with a suspension member 2 is formed such that the rib 20a is shorter (lower) on an end portion 11b side of the motor housing 11 than on an end portion 12 side of a step section 11a. The rib 20a has a vertical wall portion 21 that is parallel to the step section 11a, connects an end portion 13 of the vertical wall portion 21 and the end portion 12 of the step section 11a, and has the contact surface 21a which has a linear shape formed by one straight line inclined with respect to a plane P.

Further, in a front view, six ribs 20a are formed in a radial fashion.

### [Advantageous effects]

A description will be given of advantageous effects.

The same advantageous effects as those of the first embodiment can be obtained also by the second embodiment.

Further, the six ribs 20a are formed in the radial fashion.

Thus, the load applied to each rib can be reduced, making it possible to suppress damage to the rib 20a.

### [Third Embodiment]

FIG. 7 is a side view of a motor of a third embodiment observed from the vehicle lower direction.

The configuration of the third embodiment is the same as that of the first embodiment illustrated in FIG. 2 and FIG. 3 except for the shape of a contact surface 21b of a rib 20b. Therefore, like components as those in the first embodiment will be assigned like reference numerals, and the descriptions thereof will be omitted, and a description will be given only of the rib 20b.

The rib 20b is formed, which connects an end portion 12 of a step section 11a of a motor housing 11 and an end portion 11b of the motor housing 11. The rib 20b has a contact surface 21b which has a curved shape inclined with respect to a plane P and projected upward in the drawing. The contact surface 21b is a surface for coming in contact with a suspension member 2. The rib 20b may include one rib or a plurality of ribs provided in a radial fashion, as in the second embodiment.

### [Advantageous effects]

A description will be given of advantageous effects. The same advantageous effects as those of the first embodiment can be obtained also by the third embodiment.

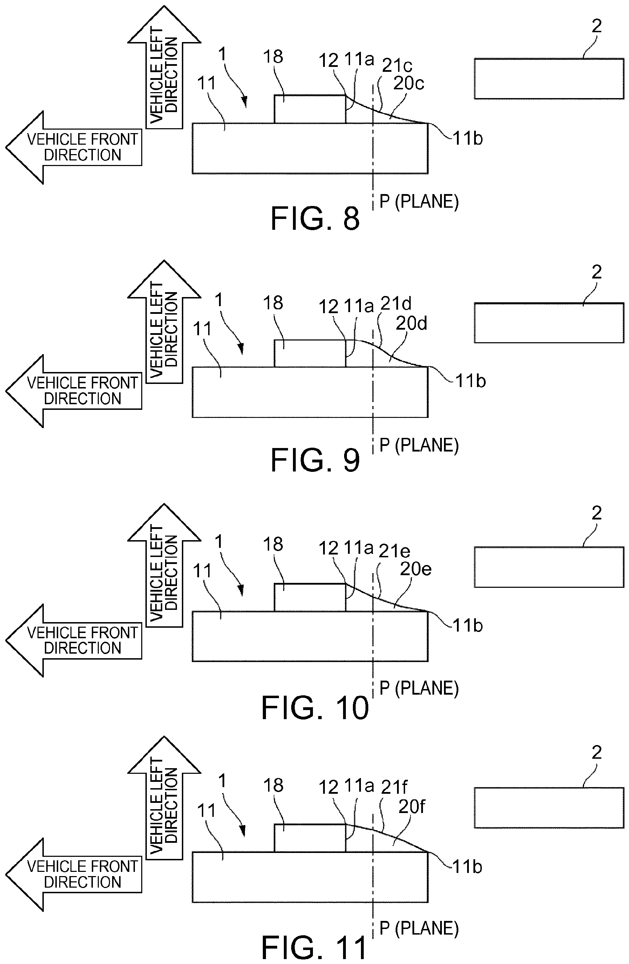

[Fourth Embodiment] FIG. 8 is a side view of a motor of a fourth embodiment observed from the vehicle lower direction.

The configuration of the fourth embodiment is the same as that of the first embodiment illustrated in FIG. 2 and FIG. 3 except for the shape of a contact surface 21c of a rib 20c. Therefore, like components as those in the first embodiment will be assigned like reference numerals, and the descriptions thereof will be omitted, and a description will be given only of the rib 20c.

The rib 20c having the contact surface 21c for coming in contact with a suspension member 2 is formed. The rib 20c connects an end portion 12 of a step section 11a of a motor housing 11 and an end portion 11b of the motor housing 11, and the contact surface 21c has a curved shape which is inclined with respect to a plane P and which is recessed at the top in the drawing.

The rib 20c may include one rib or a plurality of ribs provided in a radial fashion, as in the second embodiment.

### [Advantageous effects]

A description will be given of advantageous effects. The same advantageous effects as those of the first embodiment can be obtained also by the fourth embodiment.

[Fifth Embodiment] FIG. 9 is a side view of a motor of a fifth embodiment observed from the vehicle lower direction.

The configuration of the fifth embodiment is the same as that of the first embodiment illustrated in FIG. 2 and FIG. 3 except for the shape of a contact surface 21d of a rib 20d. Therefore, like components as those in the first embodiment will be assigned like reference numerals, and the descriptions thereof will be omitted, and a description will be given only of the rib 20d.

The rib 20d having the contact surface 21d for coming in contact with a suspension member 2 is formed. The rib 20d connects an end portion 12 of a step section 11a of a motor housing 11 and an end portion 11b of the motor housing 11, and the contact surface 21d has a curved shape which is inclined with respect to a plane P and which is composed of a projecting curve segment and a recessed curve segment in upper direction of the drawing. The projecting curve segment and the recessed curve segment are continuously and smoothly connected. The rib 20d may include one rib or a plurality of ribs provided in a radial fashion, as in the second embodiment.

### [Advantageous effects]

A description will be given of advantageous effects. The same advantageous effects as those of the first embodiment can be obtained also by the fifth embodiment. Further, the contact surface 21d is formed of the two continuously and smoothly connected curve segments, so that an entire motor 1 smoothly moves to get into under the suspension member 2 as a vehicle structure, thus enabling the impact to the step section 11a incorporating a resolver 17 to be reduced. This makes it possible to suppress damage to a conductive part, such as the resolver 17, and to achieve fine control of the impact.

[Sixth Embodiment] FIG. 10 is a side view of a motor of a sixth embodiment observed from the vehicle lower direction.

The configuration of the sixth embodiment is the same as that of the first embodiment illustrated in FIG. 2 and FIG. 3 except for the shape of a contact surface 21e of a rib 20e. Therefore, like components as those in the first embodiment will be assigned like reference numerals, and the descriptions thereof will be omitted, and a description will be given only of the rib 20e.

The rib 20e is formed, which connects an end portion 12 of a step section 11a of a motor housing 11 and an end portion 11b of the motor housing 11. The rib 20e has a contact surface 21e for coming in contact with a suspension member 2. The contact surface 21e is formed of a straight line composed of three straight lines which are continuously and smoothly connected such that the inclination thereof with respect to a plane P decreases toward the end portion 11b. The rib 20e may include one rib or a plurality of ribs provided in a radial fashion, as in the second embodiment.

### [Advantageous effects]

A description will be given of advantageous effects. The same advantageous effects as those of the first embodiment can be obtained also by the sixth embodiment. Further, the contact surface 21e is formed by continuously and smoothly connecting the three straight lines, so that an entire motor 1 smoothly moves to get into under the suspension member 2 as a vehicle structure. This makes it possible to suppress damage to a conductive part, such as the resolver 17, and to achieve fine control of the impact.

[Seventh Embodiment] FIG. 11 is a side view of a motor of a seventh embodiment observed from the vehicle lower direction.

The configuration of the seventh embodiment is the same as that of the first embodiment illustrated in FIG. 2 and FIG. 3 except for the shape of a contact surface 21f of a rib 20f. Therefore, like components as those in the first embodiment will be assigned like reference numerals, and the descriptions thereof will be omitted, and a description will be given only of the rib 20f.

The rib 20f is formed, which connects an end portion 12 of a step section 11a of a motor housing 11 and an end portion 11b of the motor housing 11. The rib 20f has the contact surface 21f. The contact surface 21f is a surface for coming in contact with a suspension member 2 and is formed of a straight line which is composed of three straight lines continuously and smoothly connected such that the inclination thereof with respect to a plane P increases toward the end portion 11b. The rib 20f may include one rib or a plurality of ribs provided in a radial fashion, as in the second embodiment.

### [Advantageous effects]

A description will be given of advantageous effects. The same advantageous effects as those of the first embodiment can be obtained also by the seventh embodiment. Further, the contact surface 21f is formed by continuously and smoothly connecting the three straight lines, so that an entire motor 1 smoothly moves to get into under the suspension member 2 as a vehicle structure. This makes it possible to suppress damage to a conductive part, such as the resolver 17, and to achieve fine control of the impact.

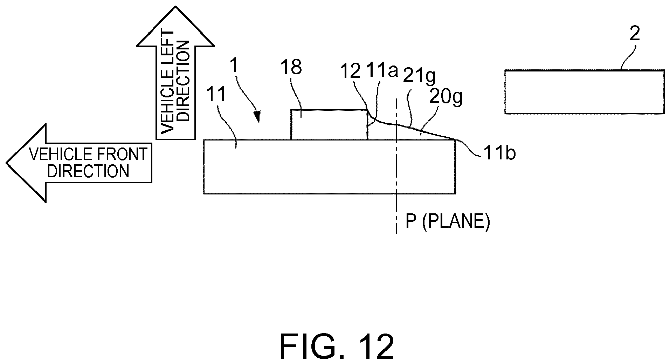

[Eighth Embodiment] FIG. 12 is a side view of a motor of an eighth embodiment observed from the vehicle lower direction.

The configuration of the eighth embodiment is the same as that of the first embodiment illustrated in FIG. 2 and FIG. 3 except for the shape of a contact surface 21g of a rib 20g. Therefore, like components as those in the first embodiment will be assigned like reference numerals, and the descriptions thereof will be omitted, and a description will be given only of the rib 20g.

The rib 20g is formed, which connects an end portion 12 of a step section 11a of a motor housing 11 and an end portion 11b of the motor housing 11. The rib 20g has the contact surface 21g for coming in contact with a suspension member 2. The contact surface 21g is formed by continuously and smoothly connecting a curve that is recessed at the top in the drawing and a straight line, which are inclined with respect to a plane P.

The rib 20g may include one rib or a plurality of ribs provided in a radial fashion, as in the second embodiment.

### [Advantageous effects]

A description will be given of advantageous effects. The same advantageous effects as those of the first embodiment can be obtained also by the eighth embodiment. Further, the contact surface 21g is formed by continuously and smoothly connecting the curve and the straight line, so that an entire motor 1 smoothly moves to get into under the suspension member 2 as a vehicle structure. This makes it possible to suppress damage to a conductive part, such as the resolver 17, and to achieve fine control of the impact.

### DESCRIPTION OF REFERENCE NUMERALS

- 1: motor
- 2: suspension member (vehicle structure)
- 3: engine
- 4: automatic transmission
- 11: motor housing
- 11a: step section
- 11b: end portion of motor housing
- 12: end portion of step section
- 17: resolver (motor rotation angle sensor)
- 20: rib
- 20a: rib
- 20b: rib
- 20c: rib
- 20d: rib
- 20e: rib
- 20f: rib
- 20g: rib
- 21a: contact surface
- 21b: contact surface
- 21c: contact surface
- 21d: contact surface
- 21e: contact surface
- 21f: contact surface
- 21g: contact surface

## Claims

1. A collision countermeasure structure for a motor (1) having a housing (11) provided with a step section (11a) that incorporates a motor rotation angle sensor (17) on a shaft end surface, the collision countermeasure structure **characterized in that**
the housing (11) comprises a rib (20, 20a, 20b, 20c, 20d, 20e, 20f, 20g) which extends between an end portion of the step section (11a) opposing a vehicle structure (2) disposed in a longitudinal direction of a vehicle and an end portion of the housing (11), the rib (20, 20a, 20b, 20c, 20d, 20e, 20f, 20g) having a contact surface (21, 21a, 21b, 21c, 21d, 21e, 21f, 21g) for coming in contact with the vehicle structure (2), and
the contact surface (21, 21a, 21b, 21c, 21d, 21e, 21f, 21g) of the rib (20, 20a, 20b, 20c, 20d, 20e, 20f, 20g) is inclined with respect to the step section (11a) and is formed to be shorter on the housing end portion side and longer on the step section end portion side.

2. The collision countermeasure structure for the motor (1) according to claim 1,
wherein the contact surface (21, 21a, 21b, 21c, 21d, 21e, 21f, 21g) of the rib (20, 20a, 20b, 20c, 20d, 20e, 20f, 20g) is formed to be continuous and smooth.

3. The collision countermeasure structure for the motor (1) according to claim 2,
wherein the contact surface (21, 21a, 21e, 21f) of the rib (20, 20a, 20e, 20f) is formed continuously and smoothly by a straight line.

4. The collision countermeasure structure fot the motor (1) according to claim 2,
wherein the contact surface (21b, 21c, 21d) of the rib (20b, 20c, 20d) is formed continuously and smoothly by a curve.

5. The collision countermeasure structure for the motor (1) according to claim 2,
wherein the contact surface (21g) of the rib (20g) is formed continuously and smoothly by a straight line and a curve.

6. The collision countermeasure structure for the motor (1) according to claim 1,
wherein the rib (20, 20a, 20b, 20c, 20d, 20e, 20f, 20g) is formed of a plurality of ribs in a plan view.

7. The collision countermeasure structure for the motor (1) according to claim 6,
wherein the plurality of ribs are formed in parallel.

8. The collision countermeasure structure for the motor (1) according to claim 6,
wherein the plurality of ribs are formed in a radial fashion.

## Patentansprüche

1. Kollisionsvermeidungs-Struktur für einen Motor (1) mit einem Gehäuse (11), das mit einem Absatzabschnitt (1a) versehen ist, der einen Motor-Drehwinkelsensor (17) an einer Wellen-Endfläche enthält, wobei die Kollisionsvermeidungs-Struktur **dadurch gekennzeichnet ist, dass**
das Gehäuse (11) eine Rippe (20, 20a, 20b, 20c, 20d, 20e, 20f, 20g) umfasst, die sich zwischen einem Endteil des Absatzabschnitts (11a), der einer in einer Längsrichtung eines Fahrzeugs angeordneten Fahrzeugstruktur (2) gegenüberliegt, und einem Endteil des Gehäuses (11) erstreckt wobei die Rippe (20, 20a, 20b, 20c, 20d, 20e, 20f, 20g) eine Kontaktfläche (21, 21a, 21b, 21c, 21d, 21e, 21f, 21g) aufweist, die mit der Fahrzeugstruktur (2) in Kontakt kommt, und
die Kontaktfläche (21, 21a, 21b, 21c, 21d, 21e, 21f, 21g) der Rippe (20, 20a, 20b, 20c, 20d, 20e, 20f, 20g) in Bezug auf den Absatzabschnitt (11a) geneigt und so ausgebildet ist, dass sie an der Seite des Endteils des Gehäuses kürzer ist und an der Seite des Endteils des Absatzabschnitts länger ist.

2. Kollisionsvermeidungs-Struktur für den Motor (1) nach Anspruch 1,
wobei die Kontaktfläche (21, 21a, 21b, 21c, 21d, 21e, 21f, 21g) der Rippe (20, 20a, 20b, 20c, 20d, 20e, 20f, 20g) durchgehend und glatt ausgebildet ist.

3. Kollisionsvermeidungs-Struktur für den Motor (1) nach Anspruch 2,
wobei die Kontaktfläche (21, 21a, 21e, 21f) der Rippe (20, 20a, 20e, 20f) durch eine gerade Linie durchgehend und glatt gebildet wird.

4. Kollisionsvermeidungs-Struktur für den Motor (1) nach Anspruch 2,
wobei die Kontaktfläche (21b, 21c, 21d) der Rippe (20b, 20c, 20d) durch eine Kurve durchgehend und glatt gebildet wird.

5. Kollisionsvermeidungs-Struktur für den Motor (1) nach Anspruch 2,
wobei die Kontaktfläche (21g) der Rippe (20g) durch eine gerade Linie und eine Kurve durchgehend und glatt gebildet wird.

6. Kollisionsvermeidungs-Struktur für den Motor (1) nach Anspruch 1,
wobei die Rippe (20, 20a, 20b, 20c, 20d, 20e, 20f, 20g) in einer Draufsicht durch eine Vielzahl von Rippen gebildet wird.

7. Kollisionsvermeidungs-Struktur für den Motor (1) nach Anspruch 6,
wobei die Vielzahl von Rippen parallel ausgebildet sind.

8. Kollisionsvermeidungs-Struktur für den Motor (1) nach Anspruch 6,
wobei die Vielzahl von Rippen radial ausgebildet sind.

## Revendications

1. Structure de contremesures anticollision pour un moteur (1) présentant un boîtier (11) doté d'une section étagée (11a) qui intègre un capteur d'angle de rotation de moteur (17) sur une surface d'extrémité d'arbre, la structure de contremesures anticollision **caractérisée en ce que**
le boîtier (11) comprend une nervure (20, 20a, 20b, 20c, 20d, 20e, 20f, 20g) qui s'étend entre une partie d'extrémité de la section étagée (11a) opposée à une structure de véhicule (2) disposée dans une direction longitudinale d'un véhicule et une partie d'extrémité du boîtier (11), la nervure (20, 20a, 20b, 20c, 20d, 20e, 20f, 20g) présentant une surface de contact (21, 21a, 21b, 21c, 21d, 21e, 21f, 21g) pour entrer en contact avec la structure de véhicule (2), et
la surface de contact (21, 21a, 21b, 21c, 21d, 21e, 21f, 21g) de la nervure (20, 20a, 20b, 20c, 20d, 20e, 20f, 20g) est inclinée par rapport à la section étagée (11a) et est constituée pour être plus courte sur le côté de partie d'extrémité de boîtier et plus longue sur le côté de partie d'extrémité de section étagée.

2. La structure de contremesures anticollision pour le moteur (1) selon la revendication 1,
dans laquelle la surface de contact (21, 21a, 21b, 21c, 21d, 21e, 21f, 21g) de la nervure (20, 20a, 20b, 20c, 20d, 20e, 20f, 20g) est constituée pour être continue et lisse.

3. La structure de contremesures anticollision pour le moteur (1) selon la revendication 2,
dans laquelle la surface de contact (21, 21a, 21e, 21f) de la nervure (20, 20a, 20e, 20f) est constituée de manière continue et lisse d'une ligne droite.

4. La structure de contremesures anticollision pour le moteur (1) selon la revendication 2,
dans laquelle la surface de contact (21b, 21c, 21d) de la nervure (20b, 20c, 20d) est constituée de manière continue et lisse d'une courbe.

5. La structure de contremesures anticollision pour le moteur (1) selon la revendication 2,
dans laquelle la surface de contact (21g) de la nervure (20g) est constituée de manière continue et lisse d'une ligne droite et d'une courbe.

6. La structure de contremesures anticollision pour le moteur (1) selon la revendication 1,
dans laquelle la nervure (20, 20a, 20b, 20c, 20d, 20e, 20f, 20g) est constituée d'une pluralité de nervures dans une vue en plan.

7. La structure de contremesures anticollision pour le moteur (1) selon la revendication 6,
dans laquelle la pluralité de nervures sont constituées parallèlement.

8. La structure de contremesures anticollision pour le moteur (1) selon la revendication 6,
dans laquelle la pluralité de nervures sont constituées radialement.
